# FASCICULE DE BREVET EUROPEEN

(11) **EP 4 300 355 B1**
(45) Date de publication et mention de la délivrance du brevet: **30.04.2025**
(21) Numéro de dépôt: 23177373.0
(22) Date de dépôt: 05.06.2023
(51) Int. Cl.: G06K 19/077, H01Q 1/22

(54) **CARTE À PUCE COMPRENANT UN ÉLÉMENT DE RENFORT**
CHIPKARTE MIT EINEM VERSTÄRKUNGSELEMENT
SMARTCARD WITH A REINFORCED ELEMENT

(30) Priorité: 28.06.2022 FR 2206469
(43) Date de publication de la demande: 03.01.2024
(73) Titulaire: IDEMIA France, 92400 Courbevoie (FR)
(72) Inventeur: SIREIX, Laurent, 92400 Courbevoie (FR); DEPRUN, Jean-François, 92400 Courbevoie (FR); LIU, Chase, 92400 Courbevoie (FR)
(74) Mandataire: Idemia

(56) Documents cités:
- EP-A1- 3 168 789
- FR-A1- 3 026 530
- KR-A- 20120 005 422
- US-A1- 2015 069 132
- US-A1- 2019 114 526

## Description

L'invention se rapporte au domaine général des cartes à puces.

De façon connue, une carte à puce peut comporter un corps et un microcircuit disposé dans le corps. Le corps de la carte définit le format de la carte à puce et est souvent formé par plusieurs couches ou substrats (inlays selon l'appellation anglo-saxonne couramment utilisée), disposés entre deux couches plastiques externes qui forment respectivement des faces externes du corps.

Le microcircuit est par exemple un circuit intégré dédié au paiement sécurisé ou au stockage des données d'identité pour réaliser une transaction de type carte présente avec un dispositif extérieur, par exemple une transaction de paiement avec un terminal de paiement.

La carte à puce est soumise au cours de sa vie à de nombreuses contraintes physiques, typiquement des contraintes mécaniques telles que la flexion ou la torsion, et doit passer avec succès des tests d'endurance, par exemple selon la norme ISO/IEC 10373-1 dans sa troisième édition, 2020-10. US2015/069132A1 divulgue une méthode pour produire un module de carte à puce, le module comprenant une structure de renforcement mécanique.

Ces contraintes mécaniques sont de plus en plus dures car la durée de vie des cartes à puces s'allonge.

Les tests d'endurance requis sont aussi de plus en plus exigeants.

En outre, le microcircuit peut communiquer avec un dispositif extérieur à travers une interface de contact mise au contact d'un dispositif adapté pour cette communication, ce type de communication étant connu comme communication par contact, par exemple telle que définie par la norme ISO/IEC 7816-2 dans sa deuxième édition, 2007-10-15.

Généralement, le corps de la carte à puce comprend ainsi une cavité ouverte sur une face du corps dans laquelle le microcircuit et l'interface de contact sont encartés, ce qui créé des lignes de contraintes mécaniques dans le corps de la puce et le fragilise.

De façon connue, la carte à puce peut comprendre en outre un autre microcircuit, par exemple un capteur d'empreintes digitales relié électriquement au microcircuit pour authentifier un utilisateur, le résultat de cette authentification permettant de valider ou de rejeter une transaction mise en œuvre par cette carte à puce.

Cependant, la présence de l'autre microcircuit dans le corps de la carte à puce fragilise encore ledit corps.

En outre, l'autre microcircuit peut être encarté dans une autre cavité ouverte sur une face du corps, par exemple quand l'autre microcircuit est un capteur d'empreintes digitales, ce qui crée une fragilité supplémentaire.

L'invention vise notamment à pallier ces inconvénients.

A cet effet, la présente invention propose une carte à puce comprenant un corps et un microcircuit disposé dans le corps, ledit corps définissant le format de ladite carte à puce et comprenant entre des couches externes dudit corps, un substrat de renfort comprenant un élément de renfort, la dite carte à puce étant caractérisée en ce que l'élément de renfort ne comprend pas de liaison électrique et forme au moins une portion en zigzag.

D'autres caractéristiques avantageuses et non limitatives de la carte à puce conforme à l'invention, prises individuellement ou selon toutes les combinaisons techniquement possibles, sont les suivantes :
- le substrat de renfort comprend un matériau électriquement isolant et l'élément de renfort est électriquement conducteur,
- au moins une partie de l'élément de renfort croise une diagonale ou une médiane du corps de la carte puce selon une direction longitudinale formant un angle compris entre 80° et 100° par rapport à ladite une diagonale ou une médiane,
- le corps comprend en outre une cavité, et au moins une partie de l'élément de renfort croise un bord de la cavité selon une direction longitudinale formant un angle compris entre 80° et 100°, de préférence 84° ou 96°, par rapport audit bord de la cavité,
- la cavité comporte une partie centrale profonde et une partie périphérique formée d'un lamage de largeur LL, moins profonde que la partie profonde, et entourant la partie profonde, et ladite au moins une partie de l'élément de renfort qui croise un bord de la cavité selon une direction longitudinale formant un angle compris entre 80° et 100°, de préférence 84° ou 96°, par rapport au bord de la cavité a une largeur L tel que L = a × LL avec a ayant une valeur comprise entre 1,5 et 1,7,
- la valeur de a est 1,6,
- l'au moins une portion en zigzag a un pas compris entre 180 micromètres et 600 micromètres,
- l'élément de renfort est un fil métallique incrusté dans une face du substrat de renfort, le fil ayant un diamètre de préférence compris entre 60 micromètres et 150 micromètres, par exemple 80 micromètres, 100 micromètres, 112 micromètres ou 130 micromètres,
- le pas est supérieur ou égale à 3 fois le diamètre du fils,
- le substrat de renfort comprend en outre un élément conducteur relié électriquement au microcircuit,
- l'élément conducteur est exposé sur une même face du substrat de renfort que l'élément de renfort,
- l'élément conducteur et l'élément de renfort sont respectivement exposés sur des faces opposées du substrat de renfort,
- le corps comprend en outre entre les couches externes dudit corps un substrat de circuit électrique comprenant un élément conducteur relié électriquement au microcircuit,
- le substrat de renfort comporte en outre un autre élément de renfort, l'élément de renfort et l'autre élément de renfort étant respectivement exposés sur des faces opposées du substrat de renfort,
- une face du substrat de renfort comprend une zone de renfort entourant au moins une zone d'adhérence, l'élément de renfort couvrant entre 51% et 85% de la surface de la zone de renfort et entre 0% et 50% de la surface de ladite au moins une zone d'adhérence.

D'autres caractéristiques et avantages de la présente invention ressortiront de la description faite ci-dessous, en référence aux figures annexées qui en illustrent des exemples de réalisation dépourvus de tout caractère limitatif.

Sur les figures:
Figure 1 représente de manière schématique un premier exemple de carte à puce conforme à l'invention ;
Figure 2 représente de manière schématique un exemple de substrat de renfort, de la carte à puce de la figure 1 ;
Figure 3 représente de manière schématique un premier exemple de vue partielle en coupe du substrat de renfort de la figure 2 ;
Figure 4 représente de manière schématique un deuxième exemple de vue partielle en coupe du substrat de renfort de la figure 2 ;
Figure 5 représente de manière schématique un deuxième exemple de carte à puce conforme à l'invention ;
Figure 6 représente de manière schématique un exemple de substrat de renfort, de la carte à puce de la figure 5 ;
Figure 7 représente de manière schématique un autre exemple de substrat de renfort avec un exemple de substrat de circuit électrique pour la carte à puce de la figure 5 ;
Figure 8 représente de manière schématique un premier exemple de vue partielle en coupe d'une superposition d'un substrat de renfort et d'un substrat de circuit électrique pour une carte à puce selon l'invention ;
Figure 9 représente de manière schématique un deuxième exemple de vue partielle en coupe d'une superposition d'un substrat de renfort et d'un substrat de circuit électrique pour une carte à puce selon l'invention ;
Figure 10 représente de manière schématique des lignes de contraintes mécaniques dans le corps de la puce à puce de la figure 5 ;
Figure 11 représente de manière schématique une cavité et un élément de renfort d'un troisième exemple de carte à puce conforme à l'invention ; et
Figure 12 représente de manière schématique une zone de renfort entourant au moins une zone d'adhérence.

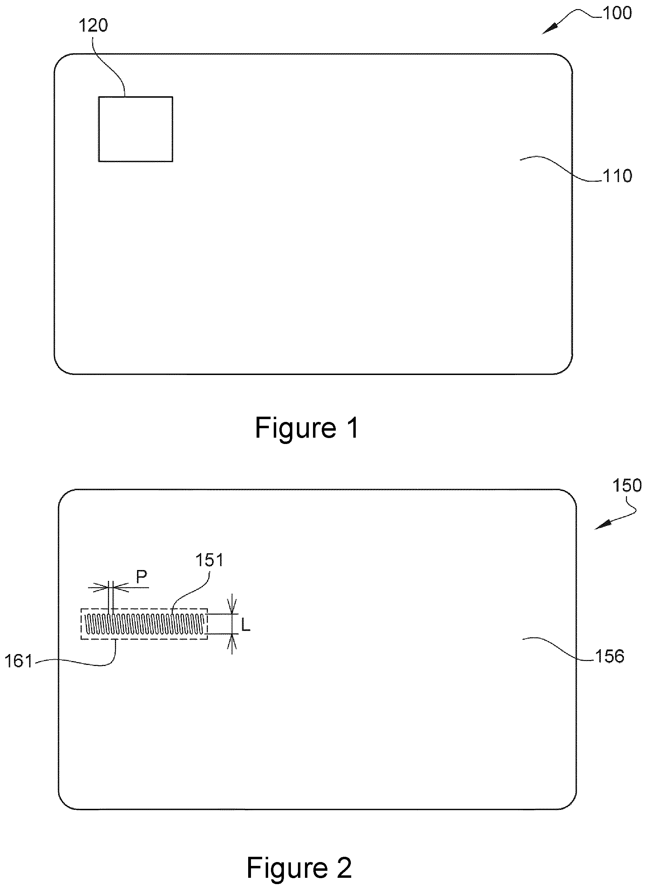

La figure 1 représente de manière schématique un exemple de carte à puce 100 conforme à l'invention.

La carte à puce 100 comprend un corps 110 et un microcircuit 120 disposé dans le corps 110.

Le corps 110 de la carte 100 définit le format de la carte à puce et peut être formé par plusieurs couches ou substrats (inlays selon l'appellation anglo-saxonne couramment utilisée), disposés entre deux couches externes qui forment respectivement des faces externes du corps.

Le corps 110 est de préférence conforme à la norme ISO/IEC 7810 (par exemple dans sa quatrième édition, 2019-12) et/ou à la norme ISO/IEC 7813 (par exemple dans sa sixième édition, 2006-07-01), notamment au format ID1 spécifié par au moins l'une de ces normes.

Le microcircuit 120 peut être un circuit intégré dédié au paiement sécurisé ou au stockage des données d'identité pour réaliser une transaction de type carte présente avec un dispositif extérieur, par exemple une transaction de paiement avec un terminal de paiement.

Le microcircuit 120 peut comprendre un processeur, une mémoire et une interface de communication avec une autre entité électronique, par exemple une interface de communication contact.

La carte 100 peut également comporter une interface de contact (non visible sur la figure 1) reliée électriquement à l'interface de communication contact du microcircuit 120. Ainsi, le microcircuit 120 peut communiquer avec un dispositif extérieur à travers l'interface de contact mise au contact d'un dispositif adapté pour cette communication, ce type de communication étant connu comme communication par contact, par exemple telle que définie par la norme ISO/IEC 7816-2 (par exemple dans sa deuxième édition, 2007-10-15).

Le corps 110 de la carte à puce 100 comprend entre les couches externes dudit corps un substrat de renfort (non visible dans la figure 1) comprenant un élément de renfort.

La fonction de l'élément de renfort est d'augmenter la résistance mécanique et la durabilité du corps de la carte à puce vis-à-vis de contraintes mécaniques telles que les torsions et flexions, et de ne pas impacter le fonctionnement de la carte à puce en cas de cassure.

La figure 2 représente de manière schématique un exemple de substrat de renfort 150 de la carte à puce 100 de la figure 1.

Le substrat de renfort 150 est par exemple formé d'une feuille configurée pour être laminée avec au moins une autre couche pour former le corps de la carte à puce. Le substrat de renfort 150 comporte une face supérieure 156. La face supérieure 156 est considérée comme plane.

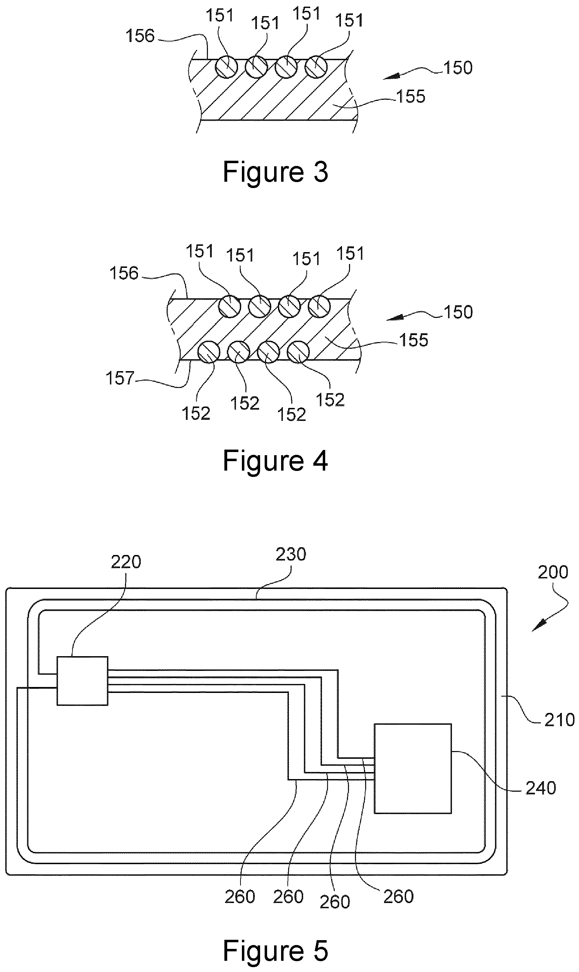

Le substrat de renfort 150 comprend un matériau électriquement isolant 155 (référencé sur la figure 3), typiquement du plastique ou du papier, et l'élément de renfort 151.

L'élément de renfort est électriquement conducteur.

Typiquement, l'élément de renfort 151 est en métal.

Le substrat de renfort et l'élément de renfort peuvent ainsi être fabriqués avec des outils et procédés existants, habituellement utilisés par l'homme du métier pour fabriquer un substrat de circuit électrique comprenant un élément conducteur, typiquement un substrat comprenant une antenne qui aura une liaison électrique avec le microcircuit, ou un substrat comprenant une, ou plusieurs, liaison électrique connectée électriquement au microcircuit et à un autre composant électronique de la carte à puce pour établir une liaison électrique entre eux.

L'élément de renfort 151 ne comprend pas de liaison électrique.

C'est-à-dire que l'élément de renfort n'est relié électriquement à aucun microcircuit et aucun composant électronique, par exemples diode, résistance ou transistor.

Ainsi, une éventuelle rupture de l'élément de renfort est sans conséquence pour le bon fonctionnement de la carte à puce car cet élément de renfort n'est pas utilisé dans une connexion électrique. Par exemple, comme représenté sur la figure 2, l'élément de renfort 151 forme au moins une portion en zigzag.

Un élément de renfort en zigzag désigne ici un élément de renfort qui est par exemple déposé en formant des allers et retours successifs, formant ainsi des segments rectilignes reliés entre eux par des détours formant des boucles. Les segments rectilignes sont par exemple parallèles les uns aux autres, et deux segments rectilignes adjacents sont par exemple reliés l'un à l'autre par une portion qui est le plus souvent courbe, par exemple en arc de cercle.

L'au moins une portion en zigzag 151 a un pas P et une largeur L.

Selon un premier exemple d'implémentation, l'élément de renfort 151 est un fil métallique, par exemple en cuivre, incrusté dans une face du substrat de renfort 150, typiquement la face supérieure 156.

Le substrat de renfort 150 peut ainsi être fabriqué avec des outils et procédés existants habituellement utilisés par l'homme du métier pour fabriquer un substrat de circuit électrique comprenant une antenne qui aura une liaison électrique avec le microcircuit ou un substrat de circuit électrique comprenant une, ou plusieurs, liaison électrique connectée électriquement au microcircuit et à un autre composant électronique de la carte à puce pour établir une liaison électrique entre eux.

Un tel substrat de renfort 150 est par exemple fabriqué en étendant le fil métallique conducteur sur le substrat, typiquement sur la face supérieure 156, au moyen d'un outil, tel qu'une sonotrode, se déplaçant au-dessus du substrat et distribuant le fil. Le fil est incrusté dans le substrat de renfort 150 au moyen de vibrations à ultrason transmises au fil depuis l'outil. Les vibrations sont transmises perpendiculairement au substrat de renfort 150 pour incruster le fil dans l'épaisseur du substrat.

Le fil est par exemple entouré d'une gaine isolante qui est chauffée, par exemple pendant un temps très court, pour améliorer l'adhérence de la gaine au substrat.

L'outil est commandé pour définir la trajectoire de dépose du fil. Il est ainsi possible d'enrouler le fil en plusieurs spires et/ou de le déposer selon des lignes de formes diverses, par exemple une ligne sinueuse 151 telle qu'illustrée dans la figure 2, comme par exemple en zigzag, ce qui comporte alternativement des segments rectilignes et des détours.

Le diamètre du fil est de préférence compris entre 60 micromètres et 150 micromètres, typiquement 80 micromètres, 100 micromètres, 112 micromètres ou 130 micromètres.

Le pas P est de préférence compris entre 180 micromètres et 600 micromètres, typiquement 400 micromètres.

Le corps 110 de la carte à puce conserve ainsi une flexibilité compatible avec la norme ISO/IEC 10373-1 (par exemple dans sa troisième édition, 2020-10) et a une meilleure résistance mécanique et durabilité vis-à-vis de contraintes mécaniques telles que les torsions et flexions En outre, le pas P est de préférence supérieur ou égale à 3 fois le diamètre du fils. Le rayon de courbure des boucles du zig zag est ainsi adapté au diamètre du fil.

Selon un deuxième exemple d'implémentation, l'élément de renfort 151 est une piste métallique imprimée sur une face du substrat de renfort 150, typiquement une piste en cuivre sur un circuit imprimé (en anglais : Printed circuit board ou PCB) flexible.

Le pourtour de l'élément de renfort 151 du substrat de renfort 150 délimite une zone 161 de la face supérieure 156 du substrat de renfort 150, dite zone de renfort.

Un élément de renfort 151 en zigzag permet d'établir une zone de renfort de grande surface avec relativement peu de matière.

La figure 3 représente de manière schématique un premier exemple de vue partielle en coupe du substrat de renfort de la figure 2.

L'élément de renfort 151 est ici un fil métallique, par exemple en cuivre, incrusté dans la face supérieure 156 du substrat de renfort 150.

La figure 4 représente de manière schématique un deuxième exemple de vue partielle en coupe du substrat de renfort de la figure 2.

Comme pour la figure 3, l'élément de renfort 151 est ici un fil métallique, par exemple en cuivre, incrusté dans une face supérieure 156 du substrat de renfort 150.

Mais le substrat de renfort 150 comporte en outre un autre élément de renfort 152 sur la face opposée 157 dudit substrat de renfort 150.

Ainsi, le substrat de renfort 150 comporte l'élément de renfort 151 et l'autre élément de renfort 152, l'élément de renfort 151 et l'autre élément de renfort 152 étant respectivement localisés sur des faces opposées du substrat de renfort 150.

Ainsi, l'élément de renfort 151 et l'autre élément de renfort 152 sont exposés, c'est-à-dire imprimés ou incrustés, sur des faces opposées du substrat de renfort 150.

On peut donc augmenter encore la résistance mécanique d'une partie du corps de la carte à puce en superposant un autre élément de renfort où il y a un élément renfort, en utilisant un seul substrat de renfort.

L'autre élément de renfort 152 est ici un fil métallique, par exemple en cuivre, incrusté dans la face opposée 157 du substrat de renfort 150.

Comme le comprend l'homme du métier, selon une alternative, l'autre élément de renfort 152 peut être une piste métallique imprimée sur la face opposée 157 du substrat de renfort 150, typiquement une piste en cuivre sur un circuit imprimé (en anglais : Printed circuit board ou PCB) flexible, notamment quand le substrat de renfort 150 est selon le deuxième exemple d'implémentation décrit ci-avant.

La figure 5 représente de manière schématique un autre exemple de carte à puce 200 conforme à l'invention.

La carte à puce 200 comprend un corps 210 et un microcircuit 220 disposé dans le corps 210.

Le corps 210 de la carte 200 définit le format de la carte à puce et peut être formé par plusieurs couches ou substrats (inlays selon l'appellation anglo-saxonne couramment utilisée), disposes entre deux couches externes qui forment respectivement des faces externes du corps.

Le corps 210 est de préférence conforme à la norme ISO/IEC 7810 (par exemple dans sa quatrième édition, 2019-12) et/ou à la norme ISO/IEC 7813 (par exemple dans sa sixième édition, 2006-07-01), notamment au format ID1 spécifié par au moins l'une de ces normes.

Le microcircuit 220 peut être un circuit intégré dédié au paiement sécurisé ou au stockage de données d'identité pour réaliser une transaction de type carte présente avec un dispositif extérieur, par exemple une transaction de paiement avec un terminal de paiement. Le microcircuit 220 peut comprendre un processeur et une mémoire et comprend une interface de communication sans contact avec une autre entité électronique.

Pour la communication du microcircuit 220 avec un dispositif extérieur, la carte à puce 200 comporte une antenne 230 intégrée dans le corps 210 et reliée électriquement au microcircuit 220. L'antenne 230 est un élément conducteur.

Ainsi, le microcircuit 220 peut communiquer avec un dispositif extérieur à travers l'antenne 230, cette communication étant connue comme communication sans contact, par exemple selon la norme ISO/IEC 14443 (par exemple dans sa quatrième édition) ou la norme NFC/ISO/IEC 15693 (par exemple dans sa troisième édition).

La carte 200 peut également comporter une interface de contact (non visible sur la figure 5). Ainsi, le microcircuit 220 peut aussi communiquer avec un dispositif extérieur à travers l'interface de contact mise au contact d'un dispositif adapté pour cette communication.

En outre, la carte à puce 200 comprend un autre microcircuit 240 disposé dans le corps 210 et relié électriquement au microcircuit 220 par plusieurs liaisons électriques 260. Chaque liaison électrique 260 est un élément conducteur.

L'autre microcircuit 240 est par exemple un capteur biométrique permettant d'authentifier un utilisateur de la carte à puce 200 et de sécuriser ainsi une transaction de type carte présente avec un dispositif extérieur, typiquement une transaction de paiement avec un terminal de paiement.

Le corps 210 de la carte à puce 200 comprend entre les couches externes dudit corps un substrat de renfort (non visible dans la figure 5) comprenant un élément de renfort.

Comme déjà indiqué, la fonction de l'élément de renfort est d'augmenter la résistance mécanique et la durabilité du corps de la carte à puce vis-à-vis de contraintes mécaniques telles que les torsions et flexions, et de ne pas impacter le fonctionnement de la carte à puce en cas de cassure.

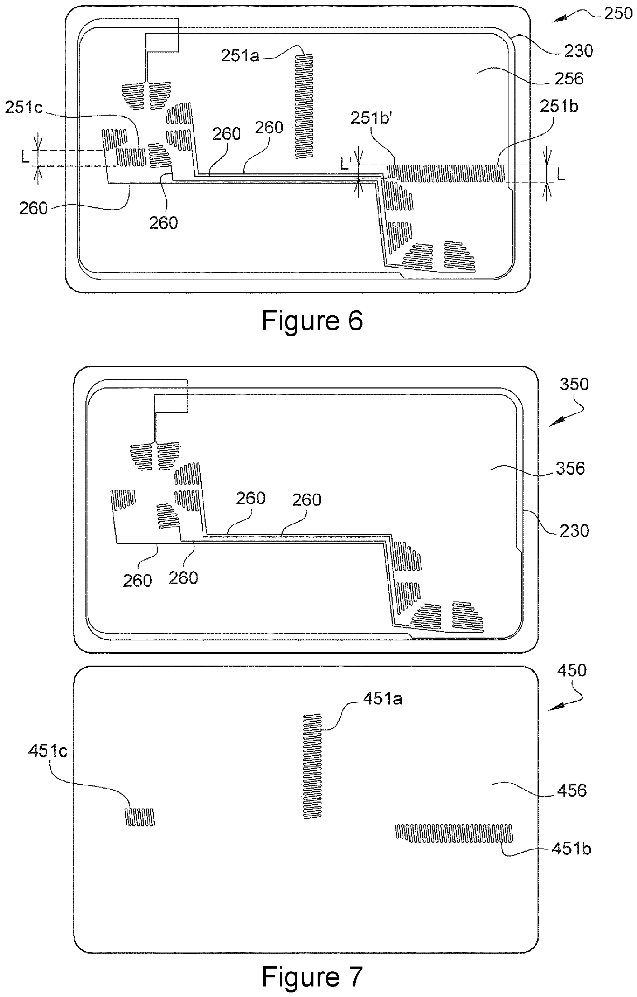

La figure 6 représente de manière schématique un exemple de substrat de renfort 250 de la carte à puce 200 de la figure 5.

Le substrat de renfort 250 est par exemple formé d'une feuille configurée pour être laminée avec au moins une autre couche pour former un corps de carte. Il comporte une face supérieure 256. La face supérieure 256 est considérée comme plane.

Le substrat de renfort 250 comprend un matériau électriquement isolant, typiquement du plastique ou du papier, et trois éléments de renfort : un premier élément de renfort 251a, un deuxième élément de renfort 251b et un troisième élément de renfort 251c.

Les éléments de renfort 251a, 251b, 251c peuvent être identiques à l'élément de renfort 151 décrit pour les figures 2 à 4.

On notera cependant que dans cet exemple, le deuxième élément de renfort 215b comprend une portion 251b' qui a une largeur L' différente de la largeur L du reste dudit deuxième élément de renfort. Un élément de renfort peut donc avantageusement comprendre des portions de largeurs différentes, notamment pour s'adapter à la présence d'autres éléments tel qu'un élément conducteur (par exemple une liaison électrique 260).

Dans cet exemple, le substrat de renfort 250 comprend en outre plusieurs éléments conducteurs reliés électriquement au microcircuit 220.

Plus précisément, le substrat de renfort 250 comprend en outre les plusieurs liaisons électriques 260 et l'antenne 230 de la carte à puce 200.

On limite ainsi le nombre de substrats dans la carte à puce, ce qui facilite le respect de l'épaisseur maximale autorisée pour le corps de carte à puce, typiquement par des normes telles que la norme ISO/IEC 7810 (par exemple dans sa quatrième édition, 2019-12) et/ou à la norme ISO/IEC 7813 (par exemple dans sa sixième édition, 2006-07-01).

En outre, l'utilisation d'un seul substrat pour renforcer le corps de la carte à puce et établir une liaison électrique au microcircuit, permet de faciliter le procédé de fabrication en limitant le nombre de substrats à utiliser pour fabriquer le corps de carte.

On notera qu'un substrat de renfort est dit « de renfort » en ce qu'il contient un élément de renfort, dont une éventuelle rupture est sans conséquence pour le bon fonctionnement de la carte à puce. Il est cependant avantageux que le substrat de renfort comprenne en outre un élément conducteur relié électriquement au microcircuit, c'est à dire un élément fonctionnel dont une éventuelle rupture impacte le bon fonctionnement de la carte à puce, pour économiser un substrat. Cependant, le substrat de renfort est toujours dit « de renfort » car il comprend l'élément de renfort.

Le choix d'implémentation pour la connexion des liaisons électriques 260 au microcircuit 220 et à l'autre microcircuit 240, et pour la connexion de l'antenne 230 au microcircuit 220, est laissé à l'homme du métier.

Par exemple, les extrémités de chaque liaison électrique 260 sont ici agencées en forme de zig zag pour constituer un moyen de contact électrique avec le microcircuit 220 ou l'autre microcircuit 240. En outre, l'antenne 230 de la carte à puce 200 a ses deux extrémités agencées en forme de zig zag pour constituer des moyens de contact électrique avec le microcircuit 220.

L'homme du métier peut cependant utiliser d'autres moyens de contact.

Une variante est possible, dans laquelle le substrat 250 ne comprend pas tous les éléments conducteurs qui sont reliés au microcircuit 220, parmi la pluralité de liaisons électrique 260 et l'antenne 230 de la carte à puce 200.

Selon un premier exemple d'implémentation, les éléments conducteurs sont en fils métalliques, par exemple en cuivre, incrustés dans une face du substrat de renfort 250, typiquement la face supérieure 256.

Selon un deuxième exemple d'implémentation, les éléments conducteurs sont des pistes métalliques imprimées sur une face du substrat de renfort 250, typiquement une piste en cuivre sur un circuit imprimé (en anglais : Printed circuit board ou PCB) flexible.

Le premier exemple d'implémentation est préféré quand les éléments de renfort 251 sont des fils métalliques incrustés dans une face du substrat de renfort 250.

On notera que lorsque les éléments de renfort 251a, 251b, 251c sont des fils métalliques incrustés dans une face du substrat de renfort 250, le diamètre du fil métallique utilisé pour chaque élément de renfort peut être choisi en fonction des contraintes mécaniques subies par le corps de carte où est l'élément de renfort associé. Ainsi le fil métallique d'un élément de renfort de la carte à puce peut avoir un diamètre identique ou différent d'un autre élément de renfort de ladite carte à puce.

Le deuxième exemple d'implémentation est préféré quand les éléments de renfort 251 sont des pistes métalliques imprimées sur une face de substrat de renfort 250.

Dans cet exemple illustré figure 6, les éléments de renfort 251 et les éléments conducteurs, c'est-à-dire les liaisons électriques 260 et l'antenne 230, sont sur la face supérieure 256 du substrat 250. Ainsi, un élément conducteur est exposé, c'est-à-dire imprimé ou incrusté, sur une même face du substrat de renfort qu'un élément de renfort.

La fabrication du substrat de renfort est ainsi économique et facile et peut être réalisée avec des équipements existants qui sont actuellement utilisés pour produire des substrats de circuit électrique pour corps de carte à puces et comprenant un élément conducteur pour être connecté à un composant électronique de ladite carte à puce.

Néanmoins, l'homme du métier comprend qu'il peut adapter le substrat 250 pour qu'au moins un élément parmi les éléments de renfort 251, les liaisons électriques 260 et l'antenne 230 ne soit pas exposé sur la face supérieur 256 du substrat 250 mais soit exposé sur la face opposée du substrat 250.

Par exemple, il peut adapter le substrat 250 tel qu'un élément conducteur, c'est-à-dire une liaison électrique 260 ou l'antenne 230, et un élément de renfort soient respectivement exposés sur des faces opposées du substrat de renfort 250.

On peut ainsi renforcer le corps de la carte à puce en superposant un élément de renfort où il y a un élément conducteur.

La figure 7 représente de manière schématique un autre exemple de substrat de renfort 450 avec un exemple de substrat de circuit électrique 350 pour la carte à puce de la figure 5.

Le substrat de renfort 450 est par exemple formé d'une feuille configurée pour être laminée avec au moins une autre couche pour former un corps de carte. Il comporte une face supérieure 456. La face supérieure 456 est considérée comme plane.

Le substrat de renfort 450 comprend un matériau électriquement isolant, typiquement du plastique ou du papier, et trois éléments de renfort: un premier élément de renfort 451a, un deuxième élément de renfort 451b et un troisième élément de renfort 451c.

Par exemple, les éléments de renfort 451a, 451b, 451c sont identiques à l'élément de renfort 151 décrit pour les figures 2 à 4 et/ou aux éléments de renfort 251 décrits pour la figure 6. Contrairement au substrat de renfort de la figure 6, le substrat de renfort 450 de cet exemple ne comprend que les éléments de renfort 451a, 451b, 451c.

Les liaisons électriques 260 et l'antenne 230 de la carte à puce 200 sont implémentées par un autre substrat 350, dit substrat de circuit électrique.

Dans cet exemple, le corps 210 de la carte à puce 200 illustrée figure 5 comprend donc entre les couches externes dudit corps, le substrat de renfort 450 et le substrat de circuit électrique 350.

Le corps de la carte à puce comprend donc entre les couches externes dudit corps un substrat de circuit électrique comprenant un élément conducteur relié électriquement au microcircuit.

On peut donc renforcer le corps de la carte à puce en superposant un élément de renfort où il y a un élément conducteur, notamment en utilisant un substrat de renfort comprenant l'élément de renfort, et tout autre éventuel élément de renfort, exposé sur une seule de ses faces. En outre, le substrat de circuit électriques peut comprendre un élément conducteur, et tout autre éventuel élément conducteur, exposé sur une seule de ses faces. La fabrication du substrat de renfort et la fabrication du substrat de circuit électrique sont ainsi économiques et faciles. Elles peuvent être réalisées avec les équipements existants qui sont actuellement utilisés pour produire des substrats de circuit électrique pour corps de carte à puce, ces substrats de circuit électrique comprenant au moins un élément conducteur pour être connecté à un composant électronique de ladite carte à puce.

Le substrat de circuit électrique 350 est par exemple formé d'une feuille configurée pour être laminée avec au moins une autre couche pour former un corps de carte. Il comporte une face supérieure 356. La face supérieure 356 est considérée comme plane.

Le substrat de circuit électrique 350 comprend un matériau électriquement isolant, typiquement du plastique ou du papier, l'antenne 230 et les liaisons électriques 260.

L'antenne 230 et les liaisons électriques 260 peuvent être identiques à l'antenne 230 et aux liaisons électriques 260 décrites pour la figure 6.

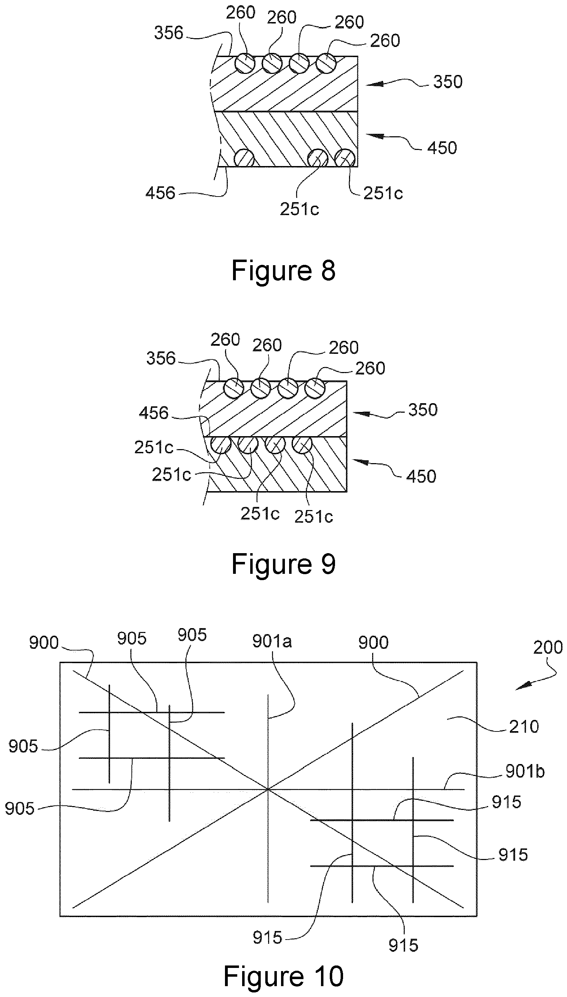

La figure 8 représente de manière schématique un premier exemple de vue partielle en coupe d'une superposition d'un substrat de renfort et d'un substrat de circuit électrique pour une carte à puce selon l'invention, typiquement une superposition du substrat de renfort 450 et du substrat de circuit électrique 350 décrits avec la figure 7 pour la carte à puce 200 illustrée figure 5.

Le troisième élément de renfort 251c et l'élément conducteur 260 sont ici des fils métalliques, par exemple en cuivre, respectivement incrustés dans la face supérieure 456 du substrat de renfort 450 et la face supérieure 356 du substrat de circuit électrique 350.

Dans cet exemple, la face du substrat de circuit électrique 350 opposée à la face supérieure 356 dudit substrat de circuit électrique 350, recouvre la face du substrat de renfort 450 opposée à la face supérieure 456 dudit substrat de renfort 450.

La figure 9 représente de manière schématique un deuxième exemple de vue partielle en coupe d'une superposition d'un substrat de renfort et d'un substrat de circuit électrique pour une carte à puce selon l'invention, typiquement un deuxième exemple d'une superposition du substrat de renfort 450 et du substrat de circuit électrique 350 décrits avec la figure 7 pour la carte à puce 200 illustrée figure 5.

Cet exemple diffère de l'exemple de la figure 8 en ce que la face du substrat de circuit électrique 350 opposée à la face supérieure 356 dudit substrat de circuit électrique 350 recouvre la face supérieure 456 du substrat de renfort 450.

D'autres exemples de superposition d'un substrat de renfort et d'un substrat de circuit électrique sont possibles pour une carte à puce selon l'invention.

Notamment, un autre substrat, ou plusieurs autres substrats, peut être interposé entre un substrat de renfort et un substrat de circuit électrique dont les faces sont disposées selon l'exemple de la figure 8 ou selon l'exemple de la figure 9.

La figure 10 représente de manière schématique des lignes de contraintes mécaniques dans le corps 210 de la puce à puce 200 de la figure 5.

Comme déjà évoqué, les cartes sont amenées à subir de nombreuses torsions ou flexions lors des nombreuses manipulations de cette carte par son détenteur. Un test correspondant, selon la norme ISO/IEC 10373-1 (par exemple dans sa troisième édition, 2020-10), est ainsi imposé pour attester de la conformité de la carte produite avec la norme ISO/IEC 7816.

La figure 10 illustre sur la carte à puce 200 de la figure 5, les zones de contraintes maximum que l'on a pu mesurer lors d'un tel test.

Les diagonales 900 du corps 210 de la carte à puce 200 correspondent aux zones de contrainte maximum en torsion.

La petite médiane 901a et la grande médiane 901b du corps 210 de la carte à puce 200, représentent les zones de contrainte maximum en flexion.

Ainsi, de manière avantageuse, au moins une partie d'un élément de renfort de la carte à puce croise une diagonale ou une médiane du corps de la carte puce selon une direction longitudinale formant un angle compris entre 80° et 100° par rapport à ladite une diagonale ou une médiane du corps de la carte puce.

Cette caractéristique permet de renforcer une partie du corps de la carte à puce subissant le plus de contraintes mécaniques. En outre, l'angle d'environ 90 degrés plus ou moins 10 degrés entre une partie longitudinale de l'élément de renfort et une diagonale ou une médiane du corps de la carte puce, permet d'obtenir une meilleure résistance mécanique pour ladite diagonale ou médiane du corps renforcée.

L'exemple de substrat de renfort 250 de la figure 6, et l'exemple de substrat de renfort 450 de la fi-gure 7, comprennent un premier élément de renfort dont au moins une partie croise une médiane du corps de la carte puce 200 de la figure 5 selon une direction longitudinale formant un angle compris entre 80° et 100° par rapport à ladite médiane.

Chaque segment rectiligne de la portion en zig zag du premier élément de renfort 251a, 451a peut être l'au moins une partie de l'élément de renfort croisant la petite médiane 901a, c'est-à-dire à une médiane, du corps de la carte puce selon une direction longitudinale formant un angle compris entre 80° et 100° par rapport à la petite médiane 901a.

De manière habituelle, le corps de carte 210 comprend une cavité formée pour loger le microcircuit 220 et l'éventuelle interface de contact permettant au microcircuit 220 de communiquer avec un dispositif extérieur.

Les lignes 905 correspondent aux zones de contrainte maximum en torsion et en flexion, induites par la présence de la cavité. Les lignes 905 correspondent aussi aux bords de la cavité et en leur prolongement rectiligne à proximité de ladite cavité, c'est-à-dire jusqu'à une distance de la cavité sensiblement égale à la longueur du bord ainsi prolongé.

De manière habituelle, le corps de carte 210 peut aussi comprendre une autre cavité formée pour loger l'autre microcircuit 240, par exemple quand l'autre microcircuit est un capteur biométrique tel qu'un capteur d'empreinte digital ou un capteur d'électrocardiogramme.

Les lignes 915 correspondent aux zones de contrainte maximum en torsion et en flexion, induites par la présence de l'autre cavité. Les lignes 915 correspondent aussi aux bords de l'autre cavité et en leur prolongement rectiligne à proximité de ladite autre cavité, c'est-à-dire jusqu'à une distance de l'autre cavité sensiblement égale la longueur du bord ainsi prolongé.

Ainsi, de manière avantageuse, au moins une partie d'un élément de renfort de la carte à puce croise un bord d'une cavité du corps de la carte puce selon une direction longitudinale formant un angle compris entre 80° et 100° par rapport audit bord d'une cavité.

Cette caractéristique permet de renforcer une partie du corps de la carte à puce qui a une fragilité mécanique. Cette fragilité est induite par la présence d'une cavité.

L'angle d'environ 90 degrés plus ou moins 10 degrés entre une partie longitudinale de l'élément de renfort et un bord d'une cavité, permet d'obtenir la meilleure résistance mécanique du corps de carte à puce pour ce bord de la cavité.

L'exemple de substrat de renfort 250 de la figure 6, et l'exemple de substrat de renfort 450 de la fi-gure 7, comprennent ainsi un deuxième élément de renfort dont au moins une partie croise un bord 915 de l'autre cavité du corps de la carte puce 200 de la figure 5, selon une direction longitudinale formant un angle compris entre 80° et 100° par rapport audit bord 915 de l'autre cavité.

En outre, l'exemple de substrat de renfort 250 de la figure 6, et l'exemple de substrat de renfort 450 de la figure 7, comprennent un troisième élément de renfort dont au moins une partie croise un bord 905 de la cavité du corps de la carte puce 200 de la figure 5, selon une direction longitudinale formant un angle compris entre 80° et 100° par rapport audit bord 905 de la cavité.

Chaque segment rectiligne de la portion en zig zag du deuxième élément de renfort 251b, 451b, respectivement du troisième élément de renfort 251c, 451c, peut être l'au moins une partie de l'élément de renfort ayant une forme longitudinale formant un angle compris entre 80° et 100° par rapport au bord 915 de l'autre cavité, respectivement par rapport au bord 905 de la cavité, du corps de la carte puce.

On notera qu'un élément de renfort en zigzag permet de multiplier les intersections entre l'élément de renfort et un axe particulier de contrainte mécanique, typiquement une diagonale ou une médiane du corps de la carte puce, ou un bord d'une cavité formée dans le corps de la carte à puce, ce qui permet d'augmenter encore la résistance mécanique et la durabilité du corps vis-à-vis de contraintes mécaniques de l'axe concerné tout en permettant au corps de conserver une flexibilité idoine, typiquement compatible avec la norme ISO/IEC 10373-1 (par exemple dans sa troisième édition, 2020-10).

De préférence, l'au moins une partie du deuxième élément de renfort croise un bord 915 de l'autre cavité du corps de la carte puce 200 de la figure 5, selon une direction longitudinale formant un angle de 84° ou 96° par rapport audit bord 915 de l'autre cavité.

De même, l'au moins une partie du troisième élément de renfort, croise un bord 905 de la cavité du corps de la carte puce 200 de la figure 5, selon une direction longitudinale formant de préférence un angle de 84° ou 96° par rapport audit bord 905 de la cavité.

Ces angles permettent de limiter le risque d'arrachage de ces éléments de renfort lors du passage d'un outil d'usinage pour fabriquer la cavité, par exemple par fraisage.

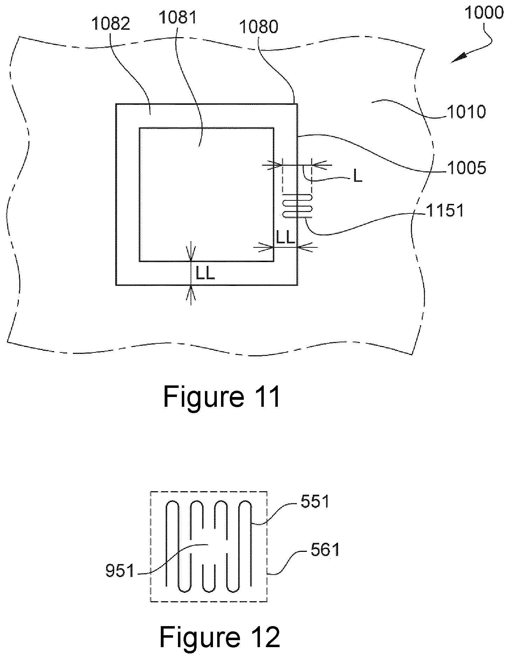

La figure 11 représente de manière schématique une cavité et un élément de renfort d'un troisième exemple de carte à puce 1000 conforme à l'invention.

La carte à puce 1000 comprend un corps 1010 comprenant une cavité 1080 formée pour loger un microcircuit, et éventuellement une interface de contact permettant au microcircuit de communiquer avec un dispositif extérieur à travers l'interface de contact.

Une zone centrale 1081 de la cavité 1080 est configurée pour former une partie profonde de la cavité.

Une zone périphérique 1082 de la cavité est configurée pour former une partie périphérique, dite un lamage, de largeur LL, moins profonde que la partie profonde et entourant la partie profonde de la cavité.

Le corps 1010 de la carte à puce 1000 comporte en outre un substrat de renfort, non représenté, comprenant un élément de renfort 1151 dont au moins une partie croise un bord 1005 de la cavité 1080 selon une direction longitudinale formant un angle compris entre 80° et 100° par rapport audit bord 1005 de la cavité 1080.

De préférence, l'élément de renfort 1151 a une largeur L tel que L = a × LL avec a ayant une valeur comprise entre 1,5 et 1,7.

Par exemple, la valeur de a est 1,6.

Ainsi l'élément de renfort peut couvrir 80% de la largeur du lamage de la cavité et être centré dans sa largeur par rapport à un bord 1005 de ladite cavité 1080.

La partie du lamage non couverte par l'élément de renfort a ainsi une largeur suffisante pour que l'élément de renfort ne soit pas coupé lors de l'usinage de la zone centrale en raison des limites de précision de l'outil d'usinage.

Typiquement, le lamage de la cavité de la carte 1000 a une largeur LL de 2,1 millimètres. L'élément de renfort 1151 a ainsi de préférence une largeur L de 3,4 millimètres.

On notera que plus la partie profonde et/ou la partie périphérique est profonde, plus le corps de carte est fragile autour de la cavité.

Ainsi, lorsqu'au moins une partie d'un élément de renfort est un fil métallique et croise un bord de la cavité, il est avantageux d'utiliser un diamètre de fil d'autant plus grand que la partie profonde et/ou la partie périphérique de la cavité est profonde.

En outre, lorsqu'au moins une partie d'un élément de renfort forme une portion en zig zag et croise un bord de la cavité, il est avantageux que le pas de la portion en zig zag soit d'autant plus petit que la partie profonde et/ou la partie périphérique de la cavité est profonde.

La figure 12 représente de manière schématique une zone de renfort 561 entourant au moins une zone d'adhérence 951.

Comme déjà décrit, une zone de renfort est une partie d'une face du substrat de renfort délimitée par le pourtour d'un élément de renfort dudit substrat de renfort.

Ici, le pourtour d'un élément de renfort 551 délimite une zone de renfort 561.

De façon avantageuse, l'élément de renfort 551 couvre entre 51% et 85% de la surface de la zone de renfort 561.

De préférence, l'élément de renfort couvre 80% de la surface de la zone de renfort, ce qui offre le meilleur compromis pour l'amélioration de la résistance mécanique et durabilité du corps de la carte à puce où se trouvent les zones de contraintes maximum, tout en conservant une flexibilité du corps de carte compatible avec la norme ISO/IEC 10373-1 (par exemple dans sa troisième édition, 2020-10).

Cependant, une couverture comprise entre 51% et 85% de la zone de renfort par l'élément de renfort, peut poser des problèmes d'adhérence entre le substrat de renfort et une autre couche du corps de carte recouvrant ladite zone de renfort.

Pour y remédier, on peut avantageusement aménager au moins une zone d'adhérence dans la zone de renfort tel que l'élément de renfort ne couvre qu'entre 0% et 50% de la surface de ladite au moins une zone d'adhérence.

On a ainsi une face du substrat de renfort comprenant une zone de renfort entourant au moins une zone d'adhérence, l'élément de renfort couvrant entre 51% et 85% de la surface de la zone de renfort et entre 0% et 50% de la surface de ladite au moins une zone d'adhérence.

Ladite au moins une zone d'adhérence, par son taux de couverture associé de l'élément de renfort, permet d'améliorer l'adhérence du substrat de renfort à un autre substrat du corps de la carte à puce tout en ayant une grande surface de zone de renfort où l'élément de renfort a un taux de couverture optimal pour l'amélioration de la résistance mécanique et de la durabilité du corps.

On notera que certains éléments généralement présents dans une carte à puce ont été volontairement omis car ils ne sont pas nécessaires à la compréhension de la présente invention.

Il convient également de noter que les cartes à puce et les substrats de renfort représentés dans les figures ne constituent que des exemples de réalisation, d'autres mises en œuvre étant possibles dans le cadre de l'invention.

Certains éléments des cartes à puce ne sont décrits ici que pour faciliter la compréhension de l'invention, ces éléments n'étant pas obligatoires pour mettre en œuvre l'invention.

Par exemple, le corps 210 de la carte à puce 200 comprend deux cavités et un élément de renfort pour un bord de chaque cavité. Mais un élément de renfort pour un bord de chaque cavité n'est pas obligatoire pour mettre en œuvre l'invention. Il peut n'y avoir aucun renfort pour les bords de la cavité et/ou de l'autre cavité de la carte à puce 200 selon un premier exemple. La carte 200 ne pourrait comprendre qu'une seule cavité selon un deuxième exemple. La carte 200 pourrait ne pas comprendre d'élément de renfort croisant au moins en partie une diagonale ou une médiane du corps de la carte puce, mais uniquement un, ou plusieurs, élément de renfort croisant au moins en partie un bord d'une cavité du corps de la carte puce.

Un homme du métier comprendra que les modes de réalisation, exemples, variantes, et différentes caractéristiques, décrits ci-avant peuvent être associés les uns avec les autres selon diverses combinaisons dans la mesure où ils ne sont pas incompatibles ou exclusifs les uns des autres.

L'homme du métier comprend aussi qu'il peut adapter l'emplacement des éléments de renforts et la forme des éléments de renforts.

## Revendications

1. Carte à puce (100, 200, 1000) comprenant un corps (110, 210, 1010) et un microcircuit (120, 220) disposé dans le corps (110, 210, 1010), ledit corps définissant le format de ladite carte à puce et comprenant entre des couches externes dudit corps un substrat de renfort (150, 250, 450) comprenant un élément de renfort (151, 251a, 251b, 251c, 451a, 451b, 451c, 1151), la dite carte à puce étant **caractérisée en ce que** l'élément de renfort (151, 251a, 251b, 251c, 451a, 451b, 451c, 1151) ne comprend pas de liaison électrique et forme au moins une portion en zigzag.

2. Carte à puce selon la revendication 1, dans laquelle le substrat de renfort (150, 250, 450) comprend un matériau électriquement isolant (155) et l'élément de renfort (151, 251a, 251b, 251c, 451a, 451b, 451c, 1151) est électriquement conducteur.

3. Carte à puce selon l'une quelconque des revendications 1 à 2, dans laquelle au moins une partie de l'élément de renfort (251a, 451a) croise une diagonale (900) ou une médiane (901a, 901b) du corps (210) de la carte puce (200) selon une direction longitudinale formant un angle compris entre 80° et 100° par rapport à ladite une diagonale (900) ou une médiane (901a, 901b).

4. Carte à puce selon l'une quelconque des revendications 1 à 3, dans laquelle le corps comprend en outre une cavité, et dans laquelle au moins une partie de l'élément de renfort (251b, 251c, 451b, 451c) croise un bord (905, 915) de la cavité selon une direction longitudinale formant un angle compris entre 80° et 100° par rapport audit bord (905, 915) de la cavité.

5. Carte à puce selon l'une quelconque des revendications 1 à 4, dans laquelle l'au moins une portion en zigzag (151, 251a, 251b, 251c, 451a, 451b, 451c, 1151) a un pas (P) compris entre 180 micromètres et 600 micromètres.

6. Carte à puce selon l'une quelconque des revendications 1 à 5, dans laquelle l'élément de renfort (151, 251a, 251b, 251c, 451a, 451b, 451c, 1151) est un fil métallique incrusté dans une face du substrat de renfort (150, 250, 450), le fil ayant un diamètre de préférence compris entre 60 micromètres et 150 micromètres.

7. Carte à puce selon l'une quelconque des revendications 1 à 6, dans laquelle le substrat de renfort (250) comprend en outre un élément conducteur (230, 260) relié électriquement au microcircuit (220).

8. Carte à puce selon la revendication 7, dans laquelle l'élément conducteur (230, 260) est exposé sur une même face du substrat de renfort (250) que l'élément de renfort (251a, 251b, 251c).

9. Carte à puce selon la revendication 7, dans laquelle l'élément conducteur (230, 260) et l'élément de renfort (251a, 251b, 251c) sont respectivement exposés sur des faces opposées du substrat de renfort (250).

10. Carte à puce selon l'une quelconque des revendications 1 à 9, le corps (210) comprenant en outre entre les couches externes dudit corps un substrat de circuit électrique (350) comprenant un élément conducteur (230, 260) relié électriquement au microcircuit (220).

11. Carte à puce selon l'une quelconque des revendications 1 à 10, dans laquelle le substrat de renfort (150) comporte en outre un autre élément de renfort (152), et dans laquelle l'élément de renfort (151) et l'autre élément de renfort (152) sont respectivement exposés sur des faces opposées (156, 157) du substrat de renfort (150).

12. Carte à selon l'une quelconque des revendications 1 à 11, dans laquelle une face du substrat de renfort comprend une zone de renfort (561) entourant au moins une zone d'adhérence (951), l'élément de renfort (551) couvrant entre 51% et 85% de la surface de la zone de renfort et entre 0% et 50% de la surface de ladite au moins une zone d'adhérence.

## Patentansprüche

1. Chipkarte (100, 200, 1000), umfassend einen Körper (110, 210, 1010) und einen Mikroschaltkreis (120, 220), der in dem Körper (110, 210, 1010) angeordnet ist, wobei der Körper das Format der Chipkarte definiert und zwischen äußeren Schichten des Körpers ein Verstärkungssubstrat (150, 250, 450) umfasst, das ein Verstärkungselement (151, 251a, 251b, 251c, 451a, 451b, 451c, 1151) umfasst, wobei die Chipkarte **dadurch gekennzeichnet ist, dass** das Verstärkungselement (151, 251a, 251b, 251c, 451a, 451b, 451c, 1151) keine elektrische Verbindung umfasst und mindestens einen zickzackförmigen Abschnitt bildet.

2. Chipkarte nach Anspruch 1, wobei das Verstärkungssubstrat (150, 250, 450) ein elektrisch isolierendes Material (155) umfasst und das Verstärkungselement (151, 251a, 251b, 251c, 451a, 451b, 451c, 1151) elektrisch leitend ist.

3. Chipkarte nach einem der Ansprüche 1 bis 2, wobei mindestens ein Teil des Verstärkungselements (251a, 451a) eine Diagonale (900) oder eine Mittellinie (901a, 901b) des Körpers (210) der Chipkarte (200) entlang einer Längsrichtung kreuzt, die einen Winkel zwischen 80° und 100° in Bezug auf die eine Diagonale (900) oder eine Mittellinie (901a, 901b) bildet.

4. Chipkarte nach einem der Ansprüche 1 bis 3, wobei der Körper ferner einen Hohlraum umfasst und wobei mindestens ein Teil des Verstärkungselements (251b, 251c, 451b, 451c) einen Rand (905, 915) des Hohlraums entlang einer Längsrichtung kreuzt, die einen Winkel zwischen 80° und 100° in Bezug auf den Rand (905, 915) des Hohlraums bildet.

5. Chipkarte nach einem der Ansprüche 1 bis 4, wobei der mindestens eine zickzackförmige Abschnitt (151, 251a, 251b, 251c, 451a, 451b, 451c, 1151) eine Schrittweite (P) zwischen 180 Mikrometern und 600 Mikrometern hat.

6. Chipkarte nach einem der Ansprüche 1 bis 5, wobei das Verstärkungselement (151, 251a, 251b, 251c, 451a, 451b, 451c, 1151) ein Metalldraht ist, der in eine Seite des Verstärkungssubstrats (150, 250, 450) eingebettet ist, wobei der Draht einen Durchmesser von bevorzugt zwischen 60 Mikrometern und 150 Mikrometern hat.

7. Chipkarte nach einem der Ansprüche 1 bis 6, wobei das Verstärkungssubstrat (250) ferner ein leitendes Element (230, 260) umfasst, das elektrisch mit dem Mikroschaltkreis (220) verbunden ist.

8. Chipkarte nach Anspruch 7, wobei das leitende Element (230, 260) auf einer selben Seite des Verstärkungssubstrats (250) wie das Verstärkungselement (251a, 251b, 251c) exponiert ist.

9. Chipkarte nach Anspruch 7, wobei das leitende Element (230, 260) und das Verstärkungselement (251a, 251b, 251c) jeweils auf entgegengesetzten Seiten des Verstärkungssubstrats (250) exponiert sind.

10. Chipkarte nach einem der Ansprüche 1 bis 9, wobei der Körper (210) ferner zwischen den äußeren Schichten des Körpers Substrat für elektrische Schaltkreise (350) umfasst, das ein leitendes Element (230, 260) umfasst, das elektrisch mit dem Mikroschaltkreis (220) verbunden ist.

11. Chipkarte nach einem der Ansprüche 1 bis 10, wobei das Verstärkungssubstrat (150) ferner ein weiteres Verstärkungselement (152) umfasst und wobei das Verstärkungselement (151) und das weitere Verstärkungselement (152) jeweils auf entgegengesetzten Seiten (156, 157) des Verstärkungssubstrats (150) exponiert sind.

12. Karte nach einem der Ansprüche 1 bis 11, wobei eine Seite des Verstärkungssubstrats einen Verstärkungsbereich (561) umfasst, der mindestens einen Haftbereich (951) umgibt, wobei das Verstärkungselement (551) zwischen 51 % und 85 % der Fläche des Verstärkungsbereichs und zwischen 0 % und 50 % der Fläche des mindestens einen Haftbereichs bedeckt.

## Claims

1. Smart card (100, 200, 1000) comprising a body (110, 210, 1010) and a microcircuit (120, 220) arranged in the body (110, 210, 1010), said body defining the format of said smart card and comprising, between outer layers of said body, a reinforcing substrate (150, 250, 450) comprising a reinforcing member (151, 251a, 251b, 251c, 451a, 451b, 451c, 1151), the smart card being **characterized in that** the reinforcing member (151, 251a, 251b, 251c, 451a, 451b, 451c, 1151) does not comprise an electrical connection and forms at least one zigzag portion.

2. Smart card according to Claim 1, wherein the reinforcing substrate (150, 250, 450) comprises an electrically insulating material (155) and the reinforcing member (151, 251a, 251b, 251c, 451a, 451b, 451c, 1151) is electrically conductive.

3. Smart card according to either one of Claims 1 and 2, wherein at least one portion of the reinforcing member (251a, 451a) intersects one diagonal (900) or one median (901a, 901b) of the body (210) of the smart card (200) in a longitudinal direction forming an angle of between 80° and 100° with respect to said one diagonal (900) or one median (901a, 901b).

4. Smart card according to any one of Claims 1 to 3, wherein the body further comprises a cavity, and wherein at least one portion of the reinforcing member (251b, 251c, 451b, 451c) intersects an edge (905, 915) of the cavity in a longitudinal direction forming an angle of between 80° and 100° with respect to said edge (905, 915) of the cavity.

5. Smart card according to any one of Claims 1 to 4, wherein the at least one zigzag portion (151, 251a, 251b, 251c, 451a, 451b, 451c, 1151) has a pitch (P) of between 180 micrometres and 600 micrometres.

6. Smart card according to any one of Claims 1 to 5, wherein the reinforcing member (151, 251a, 251b, 251c, 451a, 451b, 451c, 1151) is a metal wire embedded in a face of the reinforcing substrate (150, 250, 450), the wire having a diameter preferably of between 60 micrometres and 150 micrometres.

7. Smart card according to any one of Claims 1 to 6, wherein the reinforcing substrate (250) further comprises a conductive member (230, 260) electrically connected to the microcircuit (220).

8. Smart card according to Claim 7, wherein the conductive member (230, 260) is exposed on the same face of the reinforcing substrate (250) as the reinforcing member (251a, 251b, 251c).

9. Smart card according to Claim 7, wherein the conductive member (230, 260) and the reinforcing member (251a, 251b, 251c) are respectively exposed on opposite faces of the reinforcing substrate (250).

10. Smart card according to any one of Claims 1 to 9, the body (210) further comprising, between the outer layers of said body, an electrical circuit substrate (350) comprising a conductive member (230, 260) electrically connected to the microcircuit (220).

11. Smart card according to any one of Claims 1 to 10, wherein the reinforcing substrate (150) further comprises another reinforcing member (152), and wherein the reinforcing member (151) and the other reinforcing member (152) are respectively exposed on opposite faces (156, 157) of the reinforcing substrate (150).

12. Card according to any one of Claims 1 to 11, wherein a face of the reinforcing substrate comprises a reinforcing zone (561) surrounding at least one adhesion zone (951), the reinforcing member (551) covering between 51% and 85% of the surface area of the reinforcing zone and between 0% and 50% of the surface area of said at least one adhesion zone.
